# EUROPEAN PATENT SPECIFICATION

(11) **EP 4 349 697 B1**
(45) Date of publication and mention of the grant of the patent: **01.10.2025**
(21) Application number: 23186016.4
(22) Date of filing: 18.07.2023
(51) Int. Cl.: B62J 1/08, B62K 11/04, B62K 19/06, F16F 15/02

(54) **STRADDLED VEHICLE**
GRÄTSCHSITZFAHRZEUG
VÉHICULE À SELLE

(30) Priority: 04.10.2022 JP 2022160525
(43) Date of publication of application: 10.04.2024
(73) Proprietor: Yamaha Hatsudoki Kabushiki Kaisha, Iwata-shi, Shizuoka 438-8501 (JP)
(72) Inventor: SHIOTA, Akihiro, Iwata-shi, 4388501 (JP); HIRANO, Takumi, Iwata-shi, 4388501 (JP)
(74) Representative: Studio Torta S.p.A.

(56) References cited:
- DE-T5- 112017 007 375
- JP-A- H03 220 079
- JP-B2- 4 367 872
- JP-B2- 5 702 071
- JP-U- H0 572 689
- US-B2- 10 232 900

## Description

### BACKGROUND

### TECHNICAL FIELD

The present invention relates to a straddled vehicle.

### PRIOR ART

There has been conventionally known a type of straddled vehicle including a pair of rear frames and a seat supported by the pair of rear frames (see Japan Laid-open Patent Application Publication No. 2014-162425). The pair of rear frames is coupled to each other through a seat receiver and a cross plate. The seat receiver receives the seat; then, the cross plate is disposed directly behind the seat receiver. Thus, the pair of rear frames is enhanced in stiffness by the seat receiver and the cross plate.

In the conventional type of straddled vehicle, the pair of rear frames is enhanced in stiffness by the seat receiver and the cross plate; however, it is concerned that vibrations of the pair of rear frames, attributed to vibrations of a drive source such as an engine, cannot be effectively inhibited only by enhancement in stiffness of the pair of rear frames. Besides, it is concerned that, when the members for enhancement in stiffness of the pair of rear frames are made of metal, flexibility in layout of components degrades in the surroundings of the pair of rear frames.
DE-T-112017007375 discloses a straddled vehicle according to the preamble of claim 1.

### DESCRIPTION OF THE INVENTION

It is an object of the present invention to reduce vibrations of the pair of rear frames, and simultaneously, enhance flexibility in layout of components in the surroundings of the pair of rear frames in a straddled vehicle.

A straddled vehicle according to an aspect of the present invention includes a pair of rear frames, a seat, a resin member, and a weight member. The pair of rear frames includes a left rear frame and a right rear frame disposed apart from the left rear frame in a vehicle width direction. The seat is supported by the pair of rear frames. The resin member is bridged between the left rear frame and the right rear frame. The weight members are disposed on the resin member so as to make the resin member function as a dynamic damper.

In the straddled vehicle according to the present aspect, the resin member is configured to function as the dynamic damper by the weight member; hence, vibrations of the pair of rear frames, attributed to vibrations of a drive source such as an engine, can be reduced by the resin member. As a result, vibrations of the pair of rear frames can be inhibited from being transferred to a rider seated on the seat. Besides, the resin member is more flexible in shape than a member made of metal; hence, flexibility in layout of components is enhanced in the surroundings of the pair of rear frames.

The weight members may be made of a different material from the resin member. In this case, adjustment in weight of the weight member is made easy.

The weight members may be made of metal. In this case, increase in size of the weight member can be inhibited; simultaneously, the weight member is reliably enabled to have sufficient weight.

The straddled vehicle may further include a drive source generating a drive force. The weight member may be disposed in a position that vibrations of the planar portion attributed to vibrations of the drive source are maximized in amplitude. In this case, vibrations attributed to those of the drive source can be effectively reduced by the resin member.

According to the invention, the weight members includes a first weight portion and a second weight portion disposed in alignment with the first weight portion in the vehicle width direction. In this case, vibrations of the pair of rear frames can be effectively reduced.

The resin member may be fixed to the left rear frame and the right rear frame by an adhesive agent. In this case, the pair of rear frames can be enhanced in stiffness.

The resin member may be fixed to the left rear frame and the right rear frame by a fixation member made of metal. In this case, the pair of rear frames can be enhanced in stiffness; simultaneously, the resin member can be prevented from being unfixed and dropping from the pair of rear frames.

The resin member may be fixed to the left rear frame and the right rear frame by an adhesive agent and a fixation member made of metal. In this case, the pair of rear frames can be enhanced in stiffness; simultaneously, the resin member can be prevented from being unfixed and dropping from the pair of rear frames.

The straddled vehicle may further include a rear wheel disposed directly below the pair of rear frames. The resin member may be disposed directly above the rear wheel. In this case, the resin member can be disposed in such a region of the pair of rear frames that enables the resin member to reduce vibrations to be transferred to the seat highly effectively; hence, vibrations of the pair of rear frames can be effectively inhibited from being transferred to the rider seated on the seat.

The resin member may be shaped to avoid interference with the rear wheel. In this case, the resin member can be inhibited from interfering with the rear wheel. Besides, the resin member is more flexible in shape than a member made of metal. Therefore, the resin member is reliably enabled to have sufficient stiffness; simultaneously, flexibility in layout of components can be enhanced in the surroundings of the pair of rear frames.

The resin member may have a curved shape. In this case, the resin member is reliably enabled to have sufficient stiffness; simultaneously, flexibility in layout of components can be further enhanced in the surroundings of the pair of rear frames.

The left rear frame may include a left seat frame and a left back stay disposed below the left seat frame. The right rear frame may include a right seat frame and a right back stay disposed below the right seat frame. The resin member may be bridged between the left back stay and the right back stay. In this case, flexibility in layout of components can be enhanced in the surroundings of the pair of rear frames.

The left back stay may be disposed further on an outer side than the left seat frame in the vehicle width direction. The right back stay may be disposed further on an outer side than the right seat frame in the vehicle width direction. In this case, flexibility in layout of components can be further enhanced in the surroundings of the pair of rear frames.

Overall, according to the present invention, in a straddled vehicle, vibrations of the pair of rear frames can be reduced, and simultaneously, flexibility in layout of components can be enhanced in the surroundings of the pair of rear frames.

### BRIEF DESCRIPTION OF THE DRAWINGS

FIG. 1 is a left side view of a straddled vehicle.
FIG. 2 is a perspective view of a pair of rear frames and the surroundings thereof.
FIG. 3 is a perspective view of the pair of rear frames and a resin member.
FIG. 4 is a plan view of part of the pair of rear frames and the resin member.
FIG. 5 is a bottom view of part of the pair of rear frames and the resin member.
FIG. 6 is a cross-sectional view of a rear wheel and the resin member.
FIG. 7 is a cross-sectional view of a fixation member and the surroundings thereof.
FIG. 8 is a cross-sectional view of the resin member and a weight member.
FIG. 9 is a cross-sectional view of a resin member and a weight member according to a first modification, which is shown only for illustrative purposes and does not fall within the scope of the claims.
FIG. 10 is a cross-sectional view of a resin member and a weight member according to a second modification, which is shown only for illustrative purposes and does not fall within the scope of the claims.

### EMBODIMENTS OF THE INVENTION

A preferred embodiment of a straddled vehicle according to an aspect of the present invention will be hereinafter explained with reference to drawings. It should be noted that in the following explanation, terms indicating such directions as "back and forth", "up and down" and "right and left" are explained based on directions seen from a rider in operation of the straddled vehicle. Therefore, a right-and-left direction is synonymous with a vehicle width direction. Besides, the term "outer side in a vehicle width direction" means a side far from the center of the straddled vehicle in the vehicle width direction. By contrast, the term "inner side in the vehicle width direction" means a side near to the center of the straddled vehicle in the vehicle width direction.

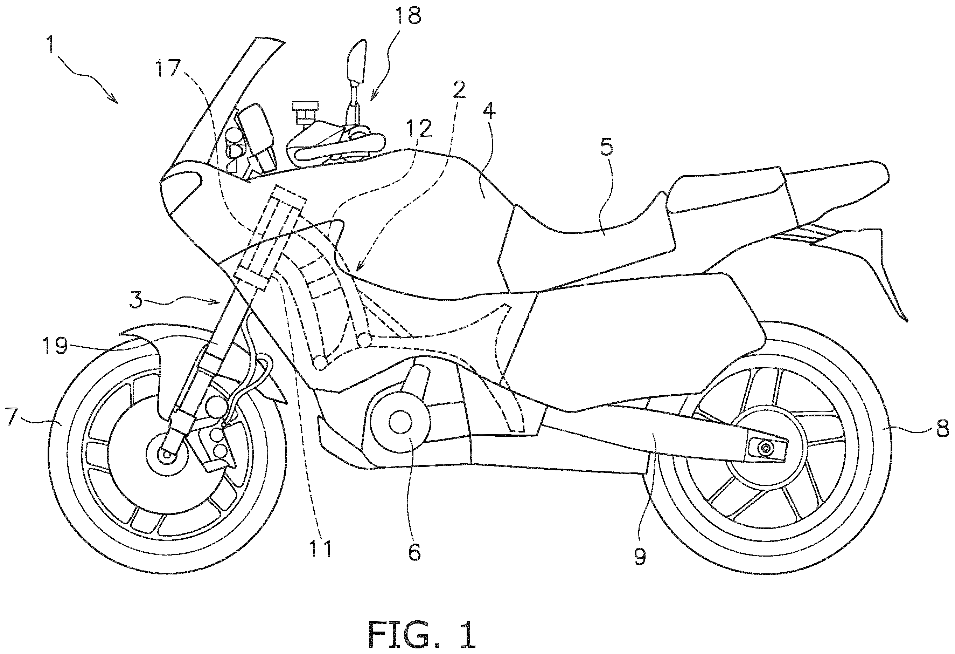

FIG. 1 is a left side view of a straddled vehicle 1. The straddled vehicle 1 includes a vehicle body frame 2, a steering device 3, a fuel tank 4, a seat 5, a drive source 6, a front wheel 7, and a rear wheel 8.

The vehicle body frame 2 includes a head pipe 11, a main frame 12, a pair of rear frames 13, a first cross member 14, and a second cross member 15.

In a vehicle side view, the head pipe 11 extends forward and downward from the upper end thereof to the lower end thereof. The head pipe 11 is disposed in the middle of the vehicle in the vehicle width direction.

The main frame 12 is connected to the head pipe 11 and extends therefrom rearward, while branching therefrom right and left into components. It should be noted that the term "connection" is not limited to direct connection and encompasses indirect connection. Besides, the term "connection" is not limited to a condition that separate members are fixed to each other and encompasses a condition that a plurality of portions in an integrated member continue to each other.

The pair of rear frames 13 is connected to the main frame 12. The pair of rear frames 13 extends rearward from the main frame 12.

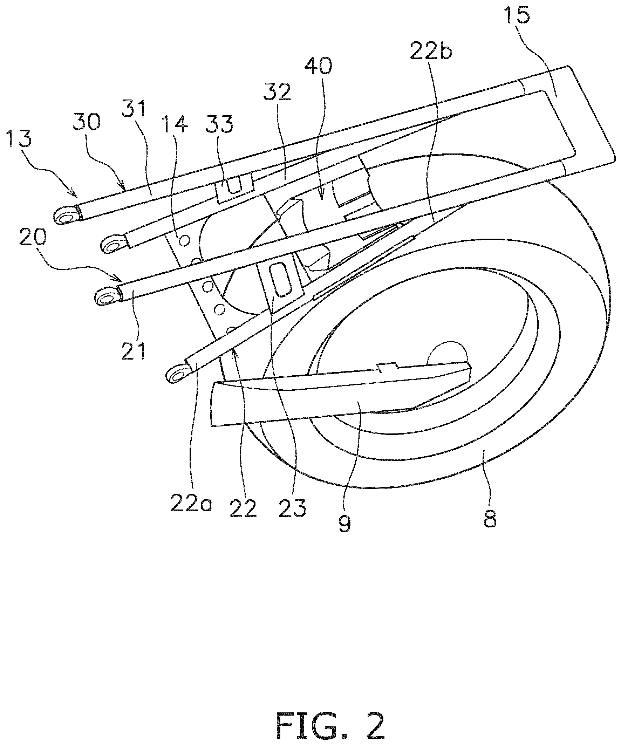

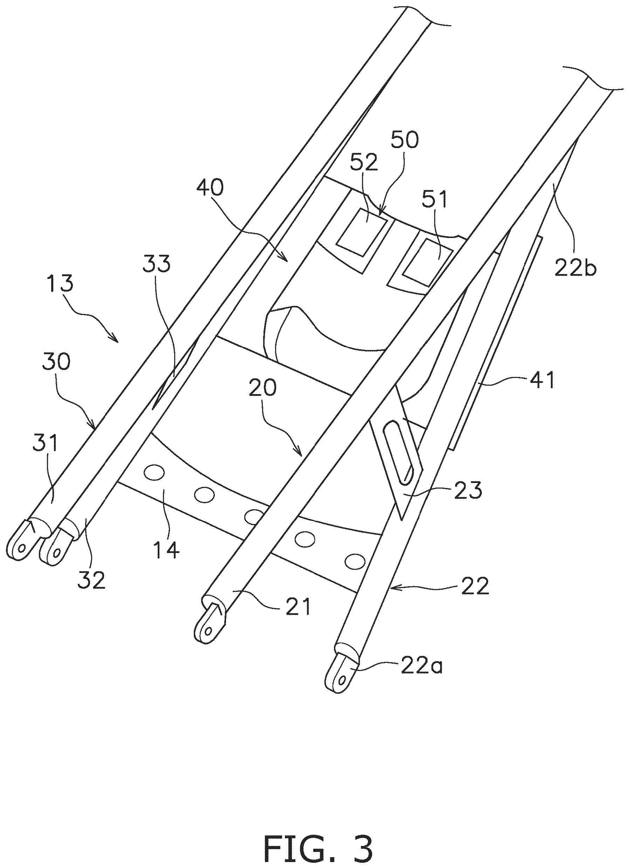

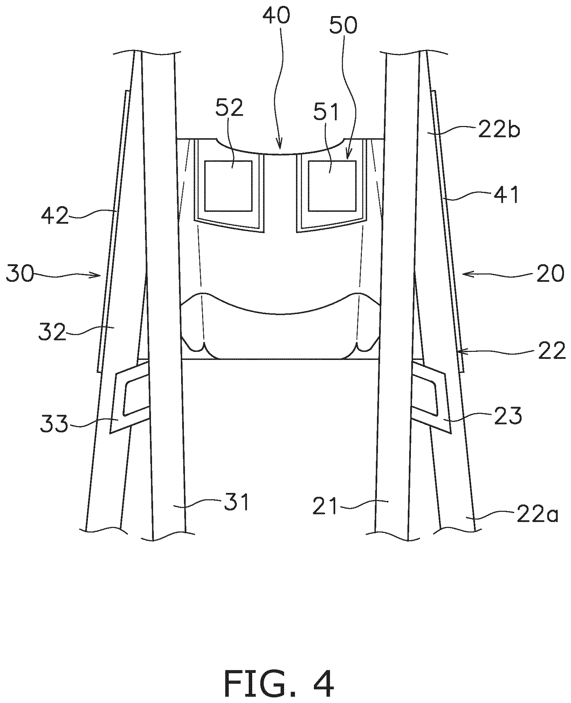

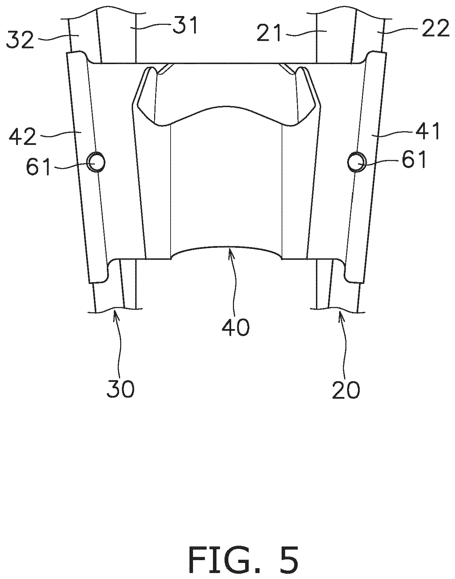

FIG. 2 is a perspective view of the pair of rear frames 13 and the surroundings thereof. FIG. 3 is a perspective view of the pair of rear frames 13 and a resin member 40 (to be described). FIG. 4 is a plan view of part of the pair of rear frames 13 and the resin member 40. FIG. 5 is a bottom view of part of the pair of rear frames 13 and the resin member 40.

As shown in FIGS. 2 to 5, the pair of rear frames 13 is composed of a left rear frame 20 and a right rear frame 30. The left rear frame 20 is disposed on the left side with respect to the center of the vehicle body frame 2 in the vehicle width direction. The left rear frame 20 is disposed on the left side with respect to the head pipe 11.

The left rear frame 20 includes a left seat frame 21, a left back stay 22, and a connecting portion 23. The left seat frame 21 extends rearward from the main frame 12. The left seat frame 21 extends further rearward than the left back stay 22.

The left back stay 22 is disposed below the left seat frame 21. The left back stay 22 is disposed further on the outer side than the left seat frame 21 in the vehicle width direction. The left back stay 22 is disposed further on the left side than the left seat frame 21. The left back stay 22 extends rearward and upward from the main frame 12.

The left back stay 22 includes a front end 22a and a rear end 22b. The front end 22a of the left back stay 22 is connected to the main frame 12. The rear end 22b of the left back stay 22 is connected to the left seat frame 21. The left back stay 22 tilts inward from the front end 22a toward the rear end 22b in the vehicle width direction.

The connecting portion 23 connects the left seat frame 21 and the left back stay 22 therethrough. The connecting portion 23 extends in approximately the up-and-down direction. The connecting portion 23 extends downward from the vicinity of the middle of the left seat frame 21 toward the left back stay 22.

The right rear frame 30 is disposed on the right side with respect to the center of the vehicle body frame 2 in the vehicle width direction. The right rear frame 30 is disposed on the right side with respect to the head pipe 11. The right rear frame 30 is disposed on the right side of the left rear frame 20. The right rear frame 30 includes a right seat frame 31, a right back stay 32, and a connecting portion 33. The right rear frame 30 is shaped bilaterally symmetric to the left rear frame 20; hence, the detailed explanation thereof will be hereinafter omitted.

As shown in FIGS. 2 and 3, the first cross member 14 couples the left back stay 22 and the right back stay 32 therethrough. The first cross member 14 extends in the right-and-left direction. The first cross member 14 is disposed between the main frame 12 and each connecting portion 23, 33.

The second cross member 15 is disposed on the rear ends of the pair of rear frames 13. The second cross member 15 couples the left seat frame 21 and the right seat frame 31 therethrough. The second cross member 15 is disposed further on the rear side than the first cross member 14. The second cross member 15 is disposed further on the rear side than the left back stay 22 and the right back stay 32.

As shown in FIG. 1, the steering device 3 is supported by the head pipe 11 so as to be turnable. The steering device 3 supports the front wheel 7 such that the front wheel 7 is made rotatable. The steering device 3 includes a steering shaft 17, a handle member 18, and a front fork 19. The steering shaft 17 is inserted into the head pipe 11. The handle member 18 is disposed above the head pipe 11. The handle member 18 extends in the right-and-left direction. The front fork 19 is connected to the steering shaft 17. The front fork 19 supports the front wheel 7 such that the front wheel 7 is made rotatable.

The fuel tank 4 is disposed directly behind the head pipe 11. The fuel tank 4 is supported by the main frame 12.

The seat 5 is disposed directly behind the fuel tank 4. The seat 5 is supported by the pair of rear frames 13. The seat 5 is disposed directly above the left seat frame 21 and the right seat frame 31.

The drive source 6 is disposed directly below the fuel tank 4. The drive source 6 is supported by the main frame 12. The drive source 6 includes, for instance, an internal combustion engine.

The front wheel 7 is supported by the front fork 19 so as to be rotatable. The rear wheel 8 is supported by the main frame 12 through a swing arm 9. The rear wheel 8 is supported by the swing arm 9 so as to be rotatable. The swing arm 9 is supported by the main frame 12 so as to be swingable.

As shown in FIGS. 2 to 5, the straddled vehicle 1 includes the resin member 40 and a weight member 50. The resin member 40 is a plate-shaped member, the entirety of which is made of a resin material. The resin member 40 extends in both the back-and-forth direction and the right-and-left direction. The resin member 40 is bridged between the left rear frame 20 and the right rear frame 30. In the present preferred embodiment, the resin member 40 is bridged between the left back stay 22 and the right back stay 32. The resin member 40 is disposed directly below the left back stay 22 and the right back stay 32. The resin member 40 is connected to a lower portion of the left back stay 22 and that of the right back stay 32.

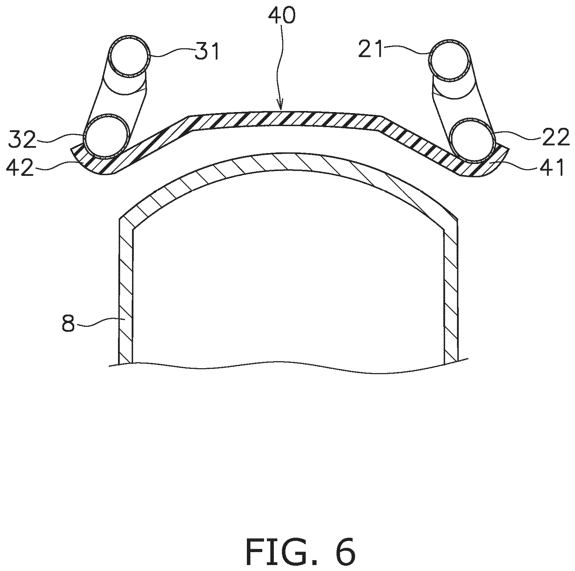

FIG. 6 is a cross-sectional view of the rear wheel 8 and the resin member 40. As shown in FIG. 6, the resin member 40 is disposed directly above the rear wheel 8. The resin member 40 overlaps with the rear wheel 8 in a vehicle plan view. The resin member 40 is disposed in approximately the middle of the pair of rear frames 13 in the back-and-forth direction. The resin member 40 is disposed between the first cross member 14 and the second cross member 15. The resin member 40 is disposed further on the rear side than the connecting portion 23 of the left rear frame 20 and the connecting portion 33 of the right rear frame 30.

The resin member 40 is shaped to avoid interference with the rear wheel 8. The resin member 40 has a curved shape. The resin member 40 is shaped to curve in a direction remote from the surface of the rear wheel 8. The lower surface of the resin member 40 is shaped at least in part along the contour of the rear wheel 8.

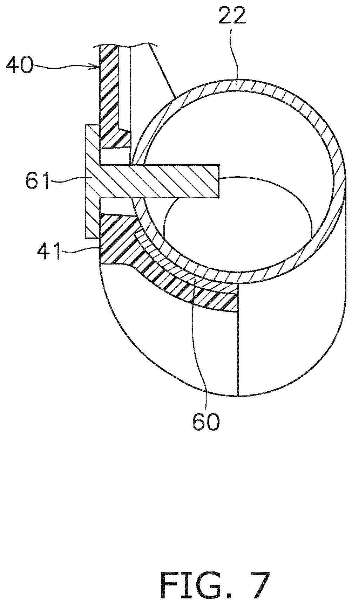

As shown in FIG. 7, the resin member 40 is fixed to the left rear frame 20 (and the right rear frame 30 as well) by an adhesive agent 60 and a fixation member 61 made of metal. The adhesive agent 60 is disposed not only between the resin member 40 and the left back stay 22 but also between the resin member 40 and the right back stay 32. The fixation member 61 made of metal is, for instance, a rivet made of metal.

The resin member 40 includes a left attached portion 41 and a right attached portion 42. The left attached portion 41 is fixed to the left back stay 22 by the adhesive agent 60 and the metallic fixation member 61 at the lower portion of the left back stay 22. The left attached portion 41 is shaped along the contour of the left back stay 22. The right attached portion 42 is fixed to the right back stay 32 by the adhesive agent 60 and the metallic fixation member 61 at the lower portion of the right back stay 32. The right attached portion 42 is shaped along the contour of the right back stay 32.

The weight member 50 is disposed on the resin member 40 so as to make the resin member 40 function as a dynamic damper. In other words, the weight member 50 is provided for making the resin member 40 exert vibrational characteristics that the vibrational phase of the resin member 40 is inverted to that of the pair of rear frames 13. Accordingly, the resin member 40 is configured to function as the dynamic damper by the weight member 50. In this case, for instance, by adjusting the weight of the weight member 50, the resonant frequency of the resin member 40 is adjusted in correspondence to the normal mode of the pair of rear frames 13. The positional arrangement of the weight member 50 is adjusted to deal with the vibrational characteristics of the pair of rear frames 13.

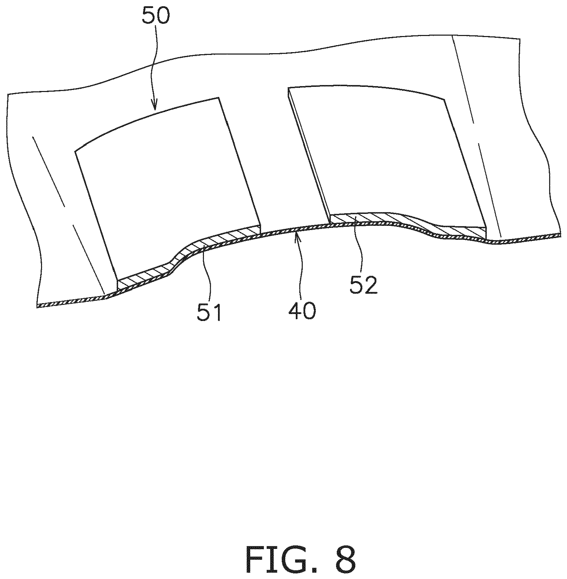

As shown in FIG. 8, the weight member 50 is made of a different material from the resin member 40. The weight member 50 is made of, for instance, metal. The weight member 50 is attached to the resin member 40 by, for instance, an adhesive agent. The weight member 50 is disposed on an upper portion of the resin member 40. The weight member 50 is disposed on a rear portion of the resin member 40. The weight member 50 may be attached to the resin member 40 by fixation means such as slip casting, resin molding, fastening with screws, or so forth.

The weight member 50 includes a first weight portion 51 and a second weight portion 52. The first weight portion 51 is disposed on the left side with respect to the center of the vehicle body frame 2 in the vehicle width direction. The second weight portion 52 is disposed on the right side with respect to the center of the vehicle body frame 2 in the vehicle width direction. The second weight portion 52 is disposed in alignment with the first weight portion 51 in the vehicle width direction.

In the straddled vehicle 1 according to the present aspect, the resin member 40 is configured to function as a dynamic damper by the weight member 50; hence, vibrations of the pair of rear frames 13, attributed to vibrations of the drive source 6 such as an internal combustion engine, can be reduced by the resin member 40. As a result, the vibrations of the pair of rear frames 13 can be inhibited from being transferred to the rider seated on the seat 5. Besides, the pair of rear frames 13 can be enhanced in stiffness by the resin member 40. The resin member 40 is more flexible in shape than a metallic member; hence, flexibility in layout of components is enhanced in the surroundings of the pair of rear frames 13.

One preferred embodiment of the present invention has been explained above. However, the present invention is not limited to the preferred embodiment described above.

The straddled vehicle 1 according to the present preferred embodiment is a so-called street motorcycle. However, the straddled vehicle 1 is not limited to the street motorcycle and may be an offroad motorcycle. Alternatively, the straddled vehicle 1 may be a scooter, an underbone, or a moped. The drive source 6 may include an electric motor.

The resin member 40 and the weight member 50 may be changed in shape and/or layout. The resin member 40 may be bridged between the left seat frame 21 and the right seat frame 31. The adhesive agent 60 and the fixation members 61 may be omitted. The resin member 40 may be fixed to each of the left and right rear frames 20 and 30 by at least either the adhesive agent 60 or the fixation member 61.

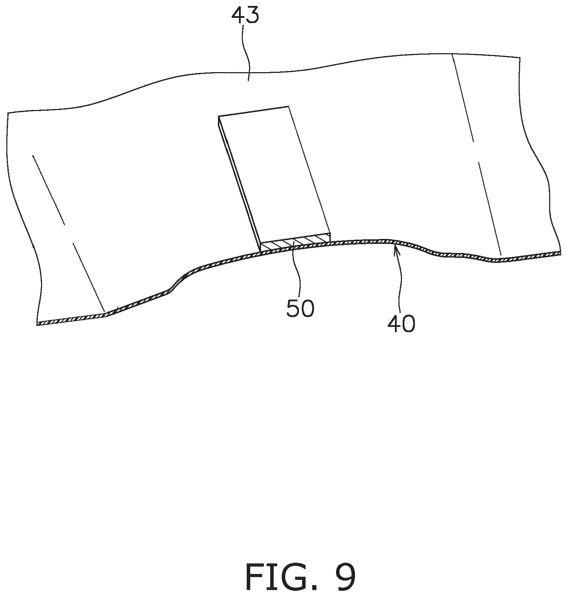

As shown in FIG. 9, the resin member 40 may include a planar portion 43, according to a modification which is shown only for illustrative purposes and does not fall within the scope of the claims.
The weight member 50 may be disposed on the planar portion 43 of the resin member 40. The weight member 50 may be disposed in such a position that vibrations of the planar portion 43, attributed to vibrations of the drive source 6, are maximized in amplitude. The planar portion 43 is disposed between the left rear frame 20 and the right rear frame 30. The planar portion 43 is provided in an upper portion of the resin member 40 so as to be disposed in the vicinity of the middle of the resin member 40 in the vehicle width direction.

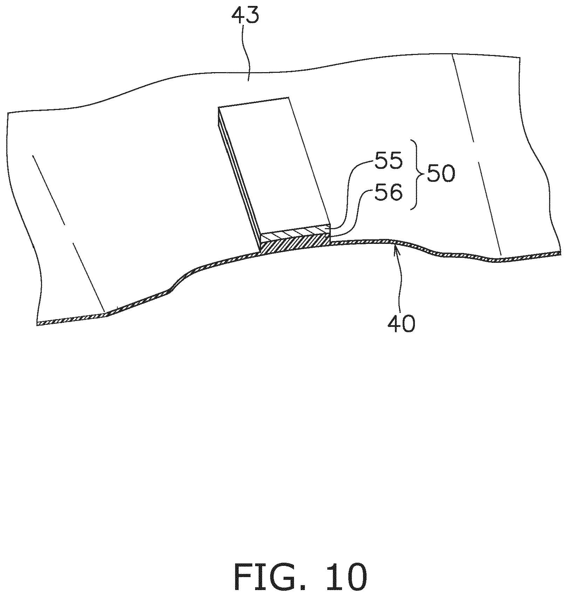

Part of the weight member 50 may be formed by part of the resin member 40. For example, as shown in FIG. 10, the weight member 50 may include a first weight portion 55 and a second weight portion 56 according to a modification which is shown only for illustrative purposes and does not fall within the scope of the claims.
The first weight portion 55 is made of a different material from the resin member 40; by contrast, the second weight portion 56 is formed by increasing in part the thickness of the resin member 40. In other words, the resonant frequency of the resin member 40 may be adjusted by increasing in part the thickness of the resin member 40. Likewise, in the preferred embodiment described above, the resonant frequency of the resin member 40 may be adjusted by increasing in part the thickness of the resin member 40 at the first and second weight portions 51 and 52.

The weight member 50 may include a third weight portion disposed in a different position from the first and second weight portions 51 and 52. The number of weights composing the weight member 50 may be one, or alternatively, may be three or greater. The weight member 50 may include a plurality of weight portions aligned in the back-and-forth direction.

### REFERENCE SIGNS LIST

- 1: Straddled vehicle

- 6: Drive source
- 8: Rear wheel
- 13: Pair of rear frames
- 20: Left rear frame
- 21: Left seat frame
- 22: Left back stay
- 30: Right rear frame
- 31: Right seat frame
- 32: Right back stay
- 40: Resin member
- 43: Flat planar portion
- 50: Weight member
- 51: First weight portion
- 52: Second weight portion
- 60: Adhesive agent
- 61: Fixation member

## Claims

1. A straddled vehicle (1) comprising:
a pair of rear frames (13) including a left rear frame (20) and a right rear frame (30), the right rear frame (30) being disposed apart from the left rear frame (20) in a vehicle width direction;
a seat (5) supported by the pair of rear frames (13);
a resin member (40) bridged between the left rear frame (20) and the right rear frame (30); and
weight members (50) disposed on the resin member (40) so as to make the resin member (40) function as a dynamic damper;
**characterized in that** the weight members (50) include a first weight portion (51) and a second weight portion (52), the second weight portion (52) being disposed in alignment with the first weight portion (51) in the vehicle width direction.

2. The straddled vehicle according to claim 1, wherein the weight member (50) is made of a different material from the resin member (40).

3. The straddled vehicle according to claim 1 or 2, wherein the weight members (50) are made of metal.

4. The straddled vehicle according to any one of claims 1 to 3, wherein the resin member (40) is fixed to the left rear frame (20) and the right rear frame (30) by an adhesive agent.

5. The straddled vehicle according to any one of claims 1 to 3, wherein the resin member (40) is fixed to the left rear frame (20) and the right rear frame (30) by a fixation member (61) made of metal.

6. The straddled vehicle according to any one of claims 1 to3, wherein the resin member (40) is fixed to the left rear frame (20) and the right rear frame (30) by an adhesive agent (60) and a fixation member (61) made of metal.

7. The straddled vehicle according to any one of claims 1 to 6, further comprising:
a rear wheel (8) disposed directly below the pair of rear frames (13), wherein
the resin member (40) is disposed directly above the rear wheel (8).

8. The straddled vehicle according to claim 7, wherein the resin member (40) is shaped to avoid interference with the rear wheel (8).

9. The straddled vehicle according to any one of claims 1 to 8, wherein the resin member (40) has a curved shape.

10. The straddled vehicle according to any one of claims 1 to 9, wherein
the left rear frame (20) includes a left seat frame (21) and a left back stay (22), the left back stay (22) being disposed below the left seat frame (21),
the right rear frame (30) includes a right seat frame (31) and a right back stay (32), the right back stay (32) being disposed below the right seat frame (31), and
the resin member (40) is bridged between the left back stay (22) and the right back stay (32).

11. The straddled vehicle according to claim 10, wherein
the left back stay (22) is disposed further on an outer side than the left seat frame (21) in the vehicle width direction, and
the right back stay (32) is disposed further on an outer side than the right seat frame (31) in the vehicle width direction.

## Patentansprüche

1. Spreizsitz-Fahrzeug (1), das umfasst:
ein Paar hinterer Rahmen (13), das einen linken hinteren Rahmen (20) sowie einen rechten hinteren Rahmen (30) einschließt, wobei der rechte hintere Rahmen (30) in einer Fahrzeug-Breitenrichtung entfernt von dem linken hinteren Rahmen (20) angeordnet ist;
einen Sitz (5), der von dem Paar hinterer Rahmen (13) getragen wird;
ein Kunststoffelement (40), das eine Brücke zwischen dem linken hinteren Rahmen (20) und dem rechten hinteren Rahmen (30) bildet; sowie
Gewichtelemente (50), die so an dem Kunststoffelement (40) angeordnet sind, dass das Kunststoffelement (40) als ein Schwingungsdämpfer wirkt;
**dadurch gekennzeichnet, dass** die Gewichtelemente (50) einen ersten Gewichtabschnitt (51) sowie einen zweiten Gewichtabschnitt (52) einschließen, wobei der zweite Gewichtabschnitt (52) in der Fahrzeug-Breitenrichtung auf den ersten Gewichtabschnitt (51) ausgerichtet angeordnet ist.

2. Spreizsitz-Fahrzeug nach Anspruch 1, wobei das Gewichtelement (50) aus einem anderen Material besteht als das Kunststoffelement (40).

3. Spreizsitz-Fahrzeug nach Anspruch 1 oder 2, wobei die Gewichtelemente (50) aus Metall bestehen.

4. Spreizsitz-Fahrzeug nach einem der Ansprüche 1 bis 3, wobei das Kunststoffelement (40) mit einem Klebstoff an dem linken hinteren Rahmen (20) und dem rechten hinteren Rahmen (30) befestigt ist.

5. Spreizsitz-Fahrzeug nach einem der Ansprüche 1 bis 3, wobei das Kunststoffelement (40) mit einem aus Metall bestehenden Befestigungselement (61) an dem linken hinteren Rahmen (20) und dem rechten hinteren Rahmen (30) befestigt ist.

6. Spreizsitz-Fahrzeug nach einem der Ansprüche 1 bis 3, wobei das Kunststoffelement (40) mit einem Klebstoff (60) sowie einem aus Metall bestehenden Befestigungselement (61) an dem linken hinteren Rahmen (20) und dem rechten hinteren Rahmen (30) befestigt ist.

7. Spreizsitz-Fahrzeug nach einem der Ansprüche 1 bis 6, das des Weiteren umfasst:
ein Hinterrad (8), das direkt unterhalb des Paars hinterer Rahmen (13) angeordnet ist, wobei
das Kunststoffelement (40) direkt oberhalb des Hinterrades (8) angeordnet ist.

8. Spreizsitz-Fahrzeug nach Anspruch 7, wobei das Kunststoffelement (40) so geformt ist, dass Überlagerung mit dem Hinterrad (8) vermieden wird.

9. Spreizsitz-Fahrzeug nach einem der Ansprüche 1 bis 8, wobei das Kunststoffelement (40) eine gekrümmte Form hat.

10. Spreizsitz-Fahrzeug nach einem der Ansprüche 1 bis 9, wobei
der linke hintere Rahmen (20) einen linken Sitz-Rahmen (21) sowie eine linke Hinterradstrebe (22) enthält und die linke Hinterradstrebe (22) unterhalb des linken Sitz-Rahmens (21) angeordnet ist,
der rechte hintere Rahmen (30) einen rechten Sitz-Rahmen (31) sowie eine rechte Hinterradstrebe (32) enthält und die rechte Hinterradstrebe (32) unterhalb des rechten Sitz-Rahmens (31) angeordnet ist, und
das Kunststoffelement (40) eine Brücke zwischen der linken Hinterradstrebe (22) und der rechten Hinterradstrebe (32) bildet.

11. Spreizsitz-Fahrzeug nach Anspruch 10, wobei
die linke Hinterradstrebe (22) in der Fahrzeug-Breitenrichtung weiter außen angeordnet ist als der linke Sitz-Rahmen (21), und
die rechte Hinterradstrebe (32) in der Fahrzeug-Breitenrichtung weiter außen angeordnet ist als der rechte Sitz-Rahmen (31).

## Revendications

1. Véhicule à enfourcher (1), comprenant :
une paire de châssis arrière (13) incluant un châssis arrière gauche (20) et un châssis arrière droit (30), le châssis arrière droit (30) étant disposé à l'écart du châssis arrière gauche (20) en direction de la largeur du véhicule ;
un siège (5) supporté par la paire de châssis arrière (13) ;
un élément en résine (40) ponté entre le châssis arrière gauche (20) et le châssis arrière droit (30) ; et
des éléments de poids (50) disposés sur l'élément en résine (40) de manière à faire fonctionner l'élément en résine (40) comme un amortisseur dynamique,
**caractérisé en ce que** les éléments de poids (50) incluent une première portion de poids (51) et une deuxième portion de poids (52), la deuxième portion de poids (52) étant alignée avec la première portion de poids (51) en direction de la largeur du véhicule.

2. Véhicule à enfourcher selon la revendication 1, dans lequel l'élément de poids (50) est constitué d'un matériau différent de l'élément en résine (40).

3. Véhicule à enfourcher selon la revendication 1 ou 2, dans lequel les éléments de poids (50) sont en métal.

4. Véhicule à enfourcher selon l'une quelconque des revendications 1 à 3, dans lequel l'élément en résine (40) est fixé au châssis arrière gauche (20) et au châssis arrière droit (30) par un agent adhésif.

5. Véhicule à enfourcher selon l'une quelconque des revendications 1 à 3, dans lequel l'élément en résine (40) est fixé au châssis arrière gauche (20) et au châssis arrière droit (30) par un élément de fixation (61) en métal.

6. Véhicule à enfourcher selon l'une quelconque des revendications 1 à 3, dans lequel l'élément en résine (40) est fixé au châssis arrière gauche (20) et au châssis arrière droit (30) par un agent adhésif (60) et un élément de fixation (61) en métal.

7. Véhicule à enfourcher selon l'une quelconque des revendications 1 à 6, comprenant en outre :
une roue arrière (8) disposée directement au-dessous de la paire de châssis arrière (13), dans lequel
l'élément en résine (40) est disposé directement au-dessus de la roue arrière (8).

8. Véhicule à enfourcher selon la revendication 7, dans lequel l'élément en résine (40) est conformé pour éviter toute interférence avec la roue arrière (8).

9. Véhicule à enfourcher selon l'une quelconque des revendications 1 à 8, dans lequel l'élément en résine (40) présente une forme incurvée.

10. Véhicule à enfourcher selon l'une quelconque des revendications 1 à 9, dans lequel
le châssis arrière gauche (20) inclut un châssis de siège gauche (21) et un support arrière gauche (22), le support arrière gauche (22) étant disposé au-dessous du châssis de siège gauche (21),
le châssis arrière droit (30) inclut un châssis de siège droit (31) et un support arrière droit (32), le support arrière droit (32) étant disposé au-dessous du châssis de siège droit (31), et
l'élément en résine (40) est ponté entre le support arrière gauche (22) et le support arrière droit (32).

11. Véhicule à enfourcher selon la revendication 10, dans lequel
le support arrière gauche (22) est disposé plus loin d'un côté externe que le châssis de siège gauche (21) en direction de la largeur du véhicule, et
le support arrière droit (32) est disposé plus loin d'un côté externe que le châssis de siège droit (31) en direction de la largeur du véhicule.
